# EUROPÄISCHE PATENTSCHRIFT

(11) **EP 0 766 327 B1**
(45) Veröffentlichungstag und Bekanntmachung des Hinweises auf die Patenterteilung: **03.03.1999**
(21) Anmeldenummer: 96111582.1
(22) Anmeldetag: 18.07.1996
(51) Int. Cl.: H01M 2/26, H01M 10/28, H01M 10/04

(54) **Prismatische, galvanische Zelle**
Prismatic galvanic cell
Pile galvanique prismatique

(30) Priorität: 30.09.1995 DE 19536684
(43) Veröffentlichungstag der Anmeldung: 02.04.1997
(73) Patentinhaber: VARTA Batterie Aktiengesellschaft, 30419 Hannover (DE)
(72) Erfinder: Bechtold, Dieter, 61118 Bad Vilbel (DE); Brandt, Klaus, Dr., 65183 Wiesbaden (DE); Bartke, Dietrich, 65779 Kelkheim (DE); Kümpers, Jörg, Dr., 65817 Eppstein (DE); Mengel, Frank, 35085 Ebsdorfergrund (DE); Vollbert, Jürgen, 65795 Hattersheim (DE)
(74) Vertreter: Kaiser, Dieter Ralf, Dipl.-Ing.

(56) Entgegenhaltungen:
- WO-A-95/24740
- DE-C- 4 240 339
- FR-A- 1 006 165
- FR-A- 1 583 202
- PATENT ABSTRACTS OF JAPAN vol. 95, no. 009 & JP-A-07 245092 (SONY CORP), 19.September 1995,
- PATENT ABSTRACTS OF JAPAN vol. 014, no. 479 (E-0992), 18.Oktober 1990 & JP-A-02 197054 (JAPAN STORAGE BATTERY CO LTD), 3.August 1990,

## Beschreibung

Die Erfindung betrifft eine prismatische, eine Vielzahl von durch Separatoren getrennte Elektrodenpaare enthaltende galvanische Zelle.

Aus dem Dokument EP-A-0 111 643 sind alkalische Akkumulatoren bekannt, deren Zellen eine Vielzahl von separatorgetrennten Elektrodenpaaren enthalten. Die Einzelzellen sind in Reihenschaltung miteinander verbunden. Die Elektroden gleicher Polarität sind dagegen parallel geschaltet, d.h. die negativen bzw. positiven Elektrodenplatten sind jeweils mit einem Stromanschlußpol verbunden, der durch die Wand der Zelle hindurch die Verbindung zu dem Stromanschlußpol der nächsten Zelle mit umgekehrter Polarität herstellt.

Wenn die Einzelzellen eine Vielzahl von Elektroden platten enthalten, werden die Stromableiterfahnen der Elektroden platten, die einen großen Abstand vom Anschlußpol haben, einer großen Biegebelastung ausgesetzt bzw. die Länge der Stromableiterfahnen muß stark erhöht werden. Ungünstig wirkt sich dabei aus, daß die Verlängerung der Stromableiterfahnen zur Vermeidung von großen Biegebelastungen entweder durch eine Vorformung der Stromableiterfahnen oder durch eine Vergrößerung des Anschluß- oder Kopfbereiches erkauft werden muß. Dabei bedingt eine Vorformung der Stromableiterfahnen einen erhöhten Arbeitsaufwand beim Zusammenbau der Zellen und die Verlängerung der Stromableiterfahnen verschlechtert die Volumen kapazität der Zellen ausgedrückt in Wh/l.

Aus dem Dokument FR-A-1 583 202 sind weiterhin Elektrodenplatten für prismatische Zellen bekannt, bei denen sich die Stromableiterfahnen entlang der oberen Kante der Elektrodenplatten erstrecken und die in geeigneter Weise mit den Anschlußpolen verbunden werden.

Die Erfindung hat sich die Aufgabe gestellt, die Volumenkapazität zu erhöhen. Weitere Ziele der Erfindung sind die Vereinfachung der Zellenmontage und die Verringerung der Kurzschlußgefahr zwischen den Elektrodenplatten unterschiedlicher Polarität.

Erfindungsgemäß wird die Aufgabe bei einer galvanischen Zelle gemäß der obengenannten Gattung durch die Maßnahmen des kennzeichnenden Teils des Anspruchs 1 gelöst.

Die vorgeschlagene Gestaltung der Stromableiterfahnen ermöglicht es, bis zu ca. 50 Elektrodenplatten einer Polarität mit dem Anschlußpol zu verbinden, ohne daß ein größerer Raumbedarf für den Anschlußbereich benötigt wird. Auch die Kurzschlußgefahr zwischenden Elektrodenplatten entgegengesetzter Polarität wird durch die erfindungsgemäße Gestaltung der Stromableiterfahnen verringert.

Insbesondere werden die erfindungsgemäß gestalteten Elektrodenplatten in Nickel-Metallhydrid- oder Lithium-lonen-Zellen verwendet. Dabei werden Walzelektroden mit einem Träger aus einem Kupfer-, Nickel-, vernickeltem Stahl- oder Aluminiumstreckmetall und sogenannte Schaum- oder Filz-Elektroden aus Nickel, vemickeltem Kupfer oder vemickeltem Stahl als Träger der aktiven Elektrodenmaterialien eingesetzt. Die Stromableiter haben Dicken von 100 bis 500 µm. Die Dicke eines aus positiver und negativer Elektrodenplatte sowie dem zugehörigen Separator bestehenden Elektrodenpaares beträgt etwa 1 mm, so daß pro Zelle 20 bis 40 vorzugsweise 25 bis 30 Elektrodenpaare eingebaut werden.

Dabei werden die Stromableiterfahnen der negativen und der positiven Elektrodenplatten so angeordnet, daß sie sich etwa von der Mitte eines Plattenrandes beginnend jeweils zu einem entgegengesetzten Ende der Plattenränder erstrecken. Diese Anordnung wird dann bevorzugt, wenn nahezu quadratische Elektrodenplatten verwendet werden oder wenn Elektrodenplatten verwendet werden, bei denen das Verhältnis von Plattenbreite zu Plattenhöhe kleiner als eins ist.

Alternativ dazu ist die Anordnung der Stromableiterfahnen der negativen und positiven Elektrodenplatten an den sich gegenüberliegenden Rändern der Elektrodenplatten dann bevorzugt, wenn das Verhältnis der Plattenbreite zur Plattenhöhe der verwendeten Elektrodenplatten deutlich größer als eins ist. Die nach den vorgenannten Bedingungen gewählten Anordnungen erlauben die jeweils günstigste Volumenausnutzung und damit die Erzielung der größten Volumenkapazität.

Vorteilhafterweise wird die Ausnehmung im Plattenrand der Elektroden so gestaltet, daß sie in den Plattenrändern im Bereich des Endes der Zungen der Stromableiterfahnen breiter als im restlichen Bereich ist. Die erfindungsgemäßen Ausnehmungen verringern die Kurzschlußgefahr im Bereich der Anschlußpole dadurch, daß ein genügend großer Abstand zwischen den Rändern der Elektrodenplatten und den Anschlußpolen vorgesehen ist, so daß selbst Abweichungen bei der Montage oder Verschiebungen der Elektrodenplattenlage keine Kurzschlüsse verursachen können.

Vorteilhafterweise sind die Stromableiterfahnen so gestaltet, daß sie aus dem Trägermaterial der Elektrodenplatte oder aus einem an den Elektrodenplatten befestigten Stromableitermaterial bestehen. Das Material der Stromableiterfahnen wird vorzugsweise als fortlaufendes Band an einem elektrodenmassefreien Streifen der Elektrodenplatten angeschweißt.

Zur Gewährleistung einer hohen Beweglichkeit der als Zungen ausgebildeten Stromableiterfahnen sind die Zungen so bemessen, daß sie eine Länge von etwa 1/3 bis 4/5 einer Elektrodenplattenkantenlänge haben.

Die Stromableitfähigkeit der Stromableiterfahnen wird in der Weise eingestellt, daß das Verhältnis der Verbindungsbreite (a) der Stromableiterfahnen mit dem Rand der Elektrodenplatten zur Breite (b) der flexiblen Zungen etwa 5:1 beträgt.

Die erfindungsgemäßen Zellen werden vorzugsweise dadurch hergestellt, daß die Stromableiterfahnen aus dem Rand der Elektrodenplatten durch Laserschneiden oder durch Stanzen herausgeformt werden. Dabei wird die Verbindung der Stromableiterfahnen mit den Anschlußpolen in effektiver Weise dadurch hergestellt, daß die Enden der Zungen durch Ultraschallschweißung mit dem jeweiligen Anschlußpol verbunden werden.

Die Erfindung wird nachfolgend an vier Figuren dargestellt.
Figur 1 zeigt den Längsschnitt durch eine Zelle, deren Stromableiterfahnen sich an den oberen Ränder der Elektrodenplatten befinden.
Figur 2 zeigt den Querschnitt durch einen Anschlußpol.
Figur 3 zeigt eine Elektrodenplatte, wie sie in einer Zelle gemäß Figur 1 verwendet wird
Figur 4 zeigt den Längsschnitt durch eine Zelle, deren Stromableiterfahnen sich an den gegenüberliegenden Rändern der Elektrodenplatten befinden.

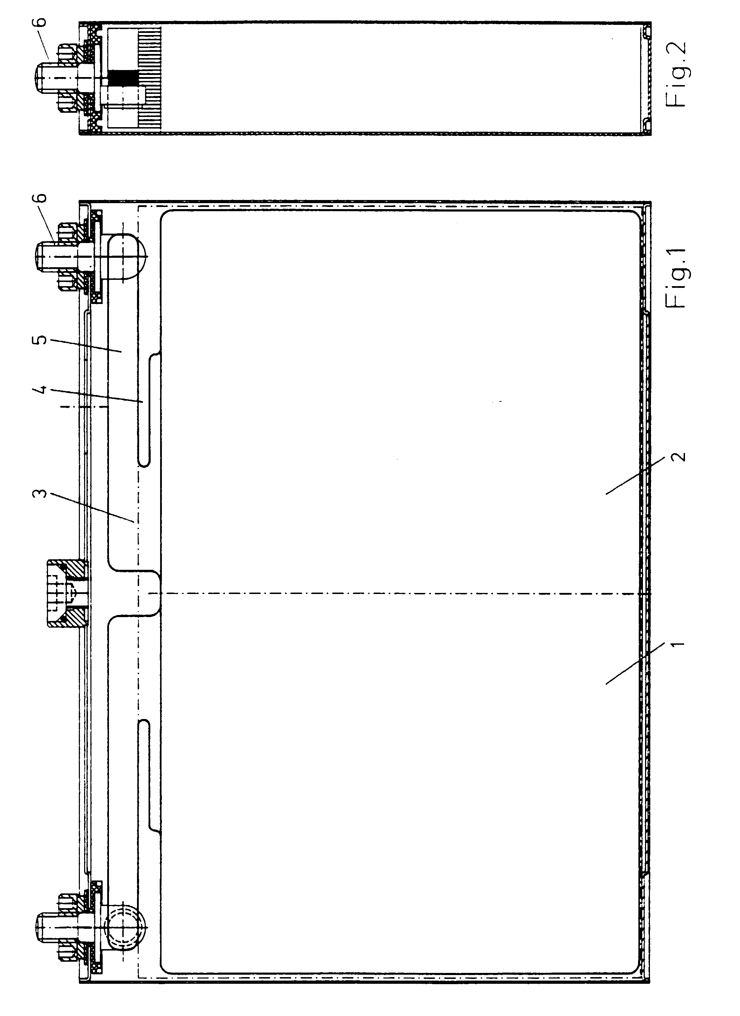

Bei der Ausführungsform der Erfindung gemäß Figur 1 sind eine Vielzahl von Elektrodenplatten 1,2 jeweils durch einen Separator getrennt, hintereinander angeordnet. Die Stromableiterfahnen 3 der Elektrodenplatten 1,2 beginnen etwa in der Mitte der oberen Plattenränder und erstrecken sich jeweils zu einem entgegengesetzten Ende der Plattenränder, wobei die Stromableiterfahnen 3 der Elektrodenplatten 1,2 einen solchen Abstand von der Mitte der oberen Plattenränder haben, daß ein Kurzschluß zwischen den positiven und den negativen Stromableiterfahnen 3 weitestgehend ausgeschlossen ist. Durch die Ausnehmungen 4 aus den oberen Plattenrändern werden die Stromableiterfahnen 3 zu flexiblen Zungen 5, die sich parallel zu den oberen Plattenrändern erstrecken, und die vorzugsweise durch Ultraschallschweißung mit dem Anschlußpol 6 verbunden werden.

Figur 2 zeigt einen Querschnitt eines Anschlußpoles 6, an den die zungenförmigen Stromableiterfahnen 3 von einer Seite herangeführt und befestigt werden.

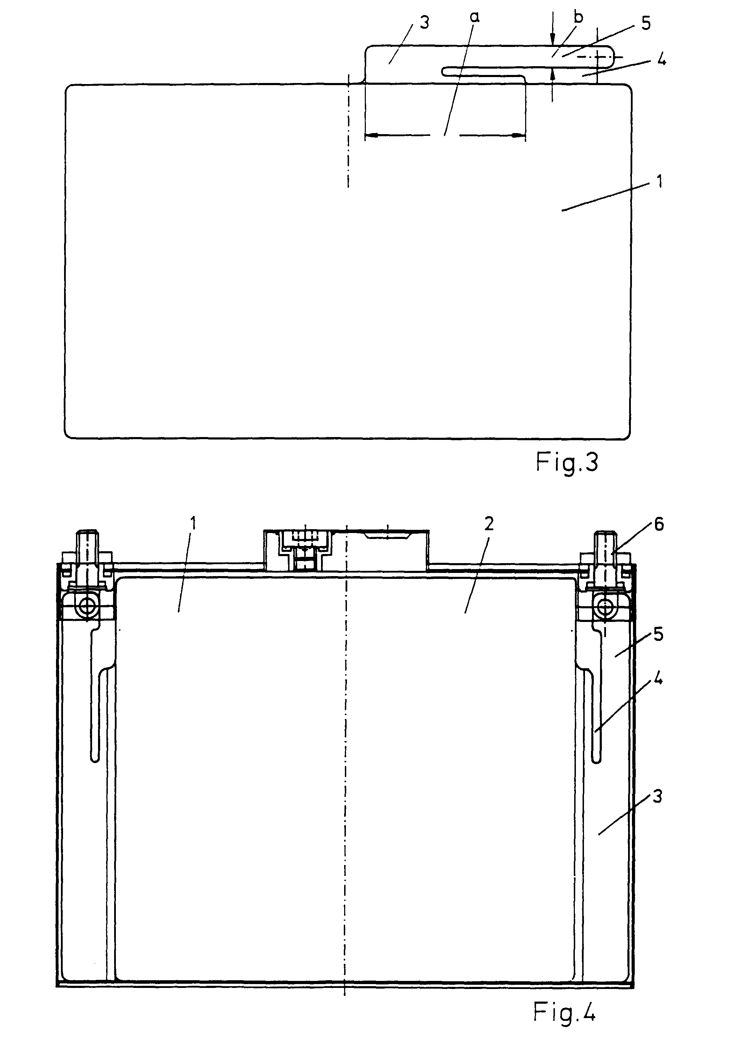

Figur 3 zeigt eine der Elektrodenplatten 1,2, wie sie in einer Zelle verwendet werden, die in Figur 1 dargestellt ist. Die Darstellung der Einzelelektrode verdeutlicht den verbreiterten

Bereich der Ausnehmung 4. Die Zungen 5 der Stromableiterfahnen 3 können selbst bei Verschiebungen des Plattensatzes kurzschlußsicher mit dem Anschlußpol 6 verbunden werden.

Eine weitere Ausführungsform der Erfindung ist in Figur 4 dargestellt. Diese Anordnung der Stromableiterfahnen 3 wird dann bevorzugt, wenn das Verhältnis von Plattenbreite zu Plattenhöhe deutlich größer als eins ist.

## Patentansprüche

1. Prismatische, eine Vielzahl von durch Separatoren getrennte Elektrodenpaare enthaltende galvanische Zelle, dadurch gekennzeichnet, daß die Elektrodenplatten (1,2) Stromableiterfahnen (3) besitzen, die entweder durch Ausnehmungen (4) aus dem oberen Plattenrändern geformt sind, wobei sich die Stromableiterfahnen (3) der negativen und positiven Elektrodenplatten (1,2) etwa von der Mitte eines Plattenrandes beginnend jeweils zu einem entgegengesetzten Ende der Plattenränder erstrecken oder durch Ausnehmungen (4) aus den seitlichen Platten rändern geformt sind, wobei die Stromableiterfahnen (3) der negativen und positiven Elektroden sich auf den gegenüberliegenden Rändern der Elektrodenplatten (1,2) befinden, wobei die Stromableiterfahnen (3) in Form flexibler Zungen (5) ausgebildet sind, die sich parallel zum oberen oder den seitlichen Plattenrändern erstrecken und alle oder Gruppen von Stromableiterfahnen (3) der Elektrodenplatten (1,2) gleicher Polarität mit den Anschlußpolen (6) verbunden sind.

2. Zelle nach Anspruch 1, dadurch gekennzeichnet, daß die Ausnehmungen (4) in den Plattenrändern im Bereich des Endes der Zungen (5) der Stromableiterfahnen (3) breiter als im restlichen Bereich sind.

3. Zelle nach Ansprüchen 1 und/oder 2, dadurch gekennzeichnet, daß die Stromableiterfahnen (3) aus dem Trägermaterial der Elektrodenplatten (1,2) oder aus einem als fortlaufendes Band an einem elektrodenmassefreien Streifen der Elektrodenplatten angeschweißten Stromableitermaterial bestehen.

4. Zelle nach einem oder mehreren der Ansprüche 1 bis 3, dadurch gekennzeichnet, daß die Zungen (5) der Stromableiterfahnen (3) eine Länge von etwa 1/3 bis 4/5 einer Elektrodenplattenkantenlänge haben.

5. Zelle nach einem oder mehreren der Ansprüche 1 bis 4, dadurch gekennzeichnet, daß das Verhältnis der Verbindungsbreite (a) der Stromableiterfahnen (3) mit den Rändern der Elektrodenplatten (1,2) zur Breite (b) der flexiblen Zungen (5) etwa 5:1 beträgt.

6. Verfahren zur Herstellung einer Zelle nach einem oder mehreren der Ansprüche 1 bis 5, dadurch gekennzeichnet, daß die Stromableiterfahnen (3) aus den Rändern der Elektrodenplatten (1,2) durch Laserschneiden oder durch Stanzen herausgeformt werden.

7. Verfahren zur Herstellung einer Zelle nach einem oder mehreren der Ansprüche 1 bis 6, dadurch gekennzeichnet, daß die Enden der Zungen (5) durch Ultraschallschweißung mit den Anschlußpolen (6) verbunden werden.

## Claims

1. Prismatic galvanic cell, containing a multiplicity of electrode pairs isolated by separators, characterized in that the electrode plates (1, 2) have current output tabs (3) which are formed either by means of recesses (4) from the upper plate edges, the current output tabs (3) of the negative and positive electrode plates (1, 2) in each case extending, starting approximately from the centre of one plate edge, to an opposite end of the plate edges, or being formed by recesses (4) from the side plate edges, the current output tabs (3) of the negative and positive electrodes being located on the opposite edges of the electrode plates (1, 2) and the current output tabs (3) being designed in the form of flexible tongues (5) which extend parallel to the upper or side plate edges and all or groups of the current output tabs (3) of the electrode plates (1, 2) of the same polarity are connected to the terminal poles (6).

2. Cell according to Claim 1, characterized in that the recesses (4) in the plate edges are broader in the region of the end of the tongues (5) of the current output tabs (3) than in the remaining region.

3. Cell according to Claims 1 and/or 2, characterized in that the current output tabs (3) are composed of the same base material as the electrode plates (1, 2) or are composed of a current output material which is welded as a continuous strip on a strip (which is free of the electrode material) of the electrode plates.

4. Cell according to one or more of Claims 1 to 3, characterized in that the tongues (5) of the current output tabs (3) have a length of about 1/3 to 4/5 of an electrode plate edge length.

5. Cell according to one or more of Claims 1 to 4, characterized in that the ratio of the connection width (a) of the current output tabs (3) with the edges of the electrode plates (1, 2) to the width (b) of the flexible tongues (5) is about 5:1.

6. Method for manufacturing a cell according to one or more of Claims 1 to 5, characterized in that the current output tabs (3) are formed from the edges of the electrode plates (1, 2) by laser cutting or by stamping.

7. Method for manufacturing a cell according to one or more of Claims 1 to 6, characterized in that the ends of the tongues (5) are connected to the terminal poles (6) by ultrasound welding.

## Revendications

1. Cellule galvanique prismatique, contenant un certain nombre de paires d'électrodes, séparées par des séparateurs,
caractérisée en ce que
les plaques des électrodes (1, 2) possèdent des talons de suspension des collecteurs de courant (3), qui sont formés soit par des évidements (4) à partir des bords supérieurs des plaques, les talons de suspension (3) des collecteurs de courant des plaques négatives et des plaques positives des électrodes s'étendant en commençant à peu près à partir du milieu du bord d'une plaque respectivement vers une extrémité opposée des bords des plaques soit étant formés par des évidements (4) à partir des bords latéraux des plaques, les talons de suspension des collecteurs de courant (3) des électrodes négatives et des électrodes positives se trouvant sur les bords opposés des plaques (1, 2) des électrodes, les talons de suspension (3) étant constitués sous la forme de languettes flexibles (5), qui s'étendent parallèlement au bord supérieur ou au bord latéral des plaques et tous les talons de suspension des collecteurs de courant (3) ou des groupes de ceux-ci des plaques (1, 2) des électrodes de même polarité étant reliés aux pôles de raccordement (6).

2. Cellule selon la revendication 1,
caractérisée en ce que
les évidements (4) sont, dans la zone de l'extrémité des languettes (5) des talons de suspension des collecteurs de courant (3), plus larges que dans le reste de la zone.

3. Cellule selon les revendications 1 et/ou 2,
caractérisée en ce que
les talons de suspension des collecteurs de courant (3) sont réalisés à partir de la matière de support des plaques (1, 2) des électrodes ou à partir de la matière d'un collecteur de courant soudé sous forme d'une bande, qui se prolonge, sur un ruban des plaques des électrodes qui est libéré de la masse de l'électrode.

4. Cellule selon une ou plusieurs des revendications 1 à 3,
caractérisée en ce que
les languettes (5) des talons de suspension des collecteurs de courant (3) ont une longueur qui va de 1/3 au 4/5èmes de la longueur du bord d'une plaque d'électrode.

5. Cellule selon une ou plusieurs des revendications 1 à 3,
caractérisée en ce que
le rapport entre la largeur (a) de la liaison des talons de suspension des collecteurs de courant (3) avec les bords des plaques (1, 2) des électrodes et la largeur (b) des languettes flexibles (5) est d'environ 5:1.

6. Procédé de fabrication d'une cellule selon une ou plusieurs des revendications 1 à 5,
caractérisé en ce que
les talons de suspension (3) des collecteurs de courant sont formés à partir des bords des plaques (1,2) des électrodes par découpage au laser ou par estampage.

7. Procédé de fabrication d'une cellule selon une ou plusieurs des revendications 1 à 6,
caractérisé en ce que
les extrémités des languettes (5) sont reliées par soudage aux ultrasons avec les pôles de raccordement (6).
